# EUROPÄISCHE PATENTSCHRIFT

(11) **EP 4 347 317 B1**
(45) Veröffentlichungstag und Bekanntmachung des Hinweises auf die Patenterteilung: **11.03.2026**
(21) Anmeldenummer: 22728848.7
(22) Anmeldetag: 12.05.2022
(51) Int. Cl.: B60R 16/02

(54) **VERFAHREN, COMPUTERPROGRAMM, VORRICHTUNG UND NUTZERSCHNITTSTELLE ZUM STEUERN VON TÜRÖFFNUNGSFUNKTIONALITÄTEN VON TÜREN EINES FORTBEWEGUNGSMITTELS**
METHOD, COMPUTER PROGRAM, DEVICE AND USER INTERFACE FOR CONTROLLING DOOR OPENING FUNCTIONALITIES OF DOORS OF A MEANS OF LOCOMOTION
PROCÉDÉ, PROGRAMME INFORMATIQUE, DISPOSITIF ET INTERFACE UTILISATEUR POUR COMMANDER DES FONCTIONNALITÉS D'OUVERTURE DE PORTES D'UN MOYEN DE LOCOMOTION

(30) Priorität: 27.05.2021 DE 102021205412
(43) Veröffentlichungstag der Anmeldung: 10.04.2024
(73) Patentinhaber: VOLKSWAGEN AKTIENGESELLSCHAFT, 38440 Wolfsburg (DE)
(72) Erfinder: SCHMÄLING, Jan, 34346 Hann. Münden (DE); RANG, Oliver, 34132 Kassel (DE); ZIMMERMANN, Matthias, 34414 Warburg (DE)
(86) Internationale Anmeldenummer: PCT/EP2022/062877
(87) Internationale Veröffentlichungsnummer: WO 2022/248235

(56) Entgegenhaltungen:
- US-A1- 2016 259 439
- US-A1- 2017 074 000
- US-A1- 2017 228 126
- US-B2- 8 332 101
- US-B2- 9 076 324

## Beschreibung

Die vorliegende Erfindung betrifft ein Verfahren, ein Computerprogramm mit Instruktionen und eine Vorrichtung zum Steuern von Türöffnungsfunktionalitäten von Türen eines Fortbewegungsmittels. Die Erfindung betrifft weiterhin ein Fortbewegungsmittel, in dem ein erfindungsgemäßes Verfahren oder eine erfindungsgemäße Vorrichtung eingesetzt wird.

In der Regel sind die Türen eines Fahrzeugs mit einem Verriegelungsmechanismus ausgestattet, der ein versehentliches Öffnen der Tür während der Fahrt und einen unbefugten Zugang verhindert. Derartige Verriegelungsmechanismen können von der Innenseite des Fahrzeugs aus bedient werden, indem entsprechende Bedienelemente betätigt werden. Die Verriegelung der Türen kann zudem mit einem Schlüssel, einem Zentralverriegelungsschalter oder mit einem Funkschlüssel erfolgen.

Vor diesem Hintergrund beschreibt US 2010/0268424 A1 ein Fahrzeugtürverriegelungssystem mit einer Steuereinheit zum selektiven Entriegeln einer Tür. Die Steuereinheit empfängt Informationen von einem Insassenerfassungssystem und Informationen zu einem Bewegungszustand des Fahrzeugs. Basierend auf den empfangenen Informationen bestimmt eine Logikeinheit, ob ein Entriegelungssignal an eine Tür gesendet werden soll.

DE 10 2018 116 723 A1 beschreibt ein Verfahren zur Regelung des Betriebs eines Verriegelungsmechanismus einer Fahrzeugtüranordnung für ein Kraftfahrzeug. Bei dem Verfahren wird eine Umgebung des Kraftfahrzeugs sensorisch überwacht und überprüft, ob beim Öffnen einer Tür eine Kollision mit einem anderen Verkehrsteilnehmer droht, z.B. mit einem Radfahrer. Falls dies der Fall ist, bleibt die entsprechende Tür verriegelt bzw. wird verriegelt.

Bei den oben genannten Lösungen wird für einzelne Türen ein Öffnen von innen unterbunden.

US 2017/0074000 A1 beschreibt ein Fahrzeugentriegelungsverfahren, bei dem eine Fahrzeugzugangsvorrichtung innerhalb einer vorgegebenen Entfernung von einem Fahrzeug detektiert wird und ein geographischer Ort des Fahrzeugs bestimmt wird. Außerdem wird eine Tageszeit detektiert und ein früheres Türentriegelungsverhalten bestimmt, das der Fahrzeugzugangsvorrichtung zugeordnet ist. Basierend auf dem geographischen Ort, der Tageszeit und dem früheren Türentriegelungsverhalten wird ein Fahrzeugzugangspunkt für das Entriegeln gewählt.

US 2016/0259439 A1 beschreibt ein Fahrzeug mit einem externen Tastenfeld mit einem Berührfeld. Das Tastenfeld ist ausgelegt zum Identifizieren eines Zugangscodes gemäß einer Benutzereingabe in das Berührfeld, wobei der Zugangscode einen numerischen Wert, der eine Zählung von gleichzeitig gedrückten Tasten des Berührfelds angibt, und/oder ein Streichmuster einschließlich eines Drückens, Verschiebens und Loslassens des Berührfelds beinhaltet. Das Tastenfeld ist zudem ausgelegt zum Senden des Zugangscodes an eine Steuerung, um Zugang zu einer Fahrzeug-Entriegelungsbenutzerschnittstelle zu erleichtern.

US 8,332,101 B2 beschreibt ein Fahrzeugtürverriegelungssystem mit einer Steuereinheit zum selektiven Entriegeln einer Tür. Die Steuereinheit ist eingerichtet zum Empfangen eines Signals von einem Insassenerfassungssystem und weist eine Logikeinheit auf zum Bestimmen, ob ein Entriegelungssignal an die Tür zu senden ist, basierend auf dem Signal. Die Steuereinheit ist zudem eingerichtet zum selektiven Senden des Entriegelungssignals an die Tür, wenn die Bedingungen für die automatische Türentriegelung erfüllt sind.

Taxifahrer haben es mit vielen verschiedenen Typen von Menschen zu tun, angenehmen wie unangenehmen. Aus diesem Grund stehen Taxifahrer manchmal vor der Situation, dass sie einen Fahrgast nicht ins Fahrzeug lassen wollen, zumindest aber nicht auf den Beifahrersitz. Problematisch kann es für den Fahrer insbesondere werden, wenn sich der Fahrgast bereits ins Fahrzeug gesetzt hat, aufgrund seines Verhaltens oder andere Faktoren das Fahrzeug aber wieder verlassen soll. Dies kann schnell zu einer Eskalation führen.

Auch aus Gründen des Infektionsschutzes kann es erforderlich sein, das Mitfahren auf dem Beifahrersitz zur Minimierung einer Ansteckungsgefahr für den Taxifahrer oder den Fahrgast zu unterbinden. Aktuell behelfen sich die Taxifahrer damit, den Beifahrersitz mit Gegenständen zu belegen oder mit einem Zettel auf der Beifahrerscheibe auf den Zustieg im hinteren Bereich des Fahrzeugs zu verweisen.

Es ist eine Aufgabe der Erfindung, verbesserte Lösungen zum Steuern von Türöffnungsfunktionalitäten von Türen eines Fortbewegungsmittels bereitzustellen.

Diese Aufgabe wird durch ein Verfahren mit den Merkmalen des Anspruchs 1, durch ein Computerprogramm mit Instruktionen gemäß Anspruch 9 und durch eine Vorrichtung mit den Merkmalen des Anspruchs 10 gelöst. Bevorzugte Ausgestaltungen der Erfindung sind Gegenstand der abhängigen Ansprüche.

Gemäß einem ersten Aspekt der Erfindung umfasst ein Verfahren zum Steuern von Türöffnungsfunktionalitäten von Türen eines Fortbewegungsmittels die Schritte:
- Erfassen einer Handlung eines Nutzers des Fortbewegungsmittels, wobei die Handlung des Nutzers eine Eingabe des Nutzers in eine Nutzerschnittstelle, ein Verlassen des Fortbewegungsmittels oder das Öffnen einer Tür des Fortbewegungsmittels umfasst;
- Auswerten zumindest der erfassten Handlung; und
- selektives Steuern der Türöffnungsfunktionalitäten der Türen in Abhängigkeit von einem Ergebnis des Auswertens, wobei zumindest eine Tür des Fortbewegungsmittels deaktiviert wird.

Gemäß einem weiteren Aspekt der Erfindung umfasst ein Computerprogramm Instruktionen, die bei Ausführung durch einen Computer den Computer zur Ausführung der folgenden Schritte zum Steuern von Türöffnungsfunktionalitäten von Türen eines Fortbewegungsmittels veranlassen:
- Erfassen einer Handlung eines Nutzers des Fortbewegungsmittels, wobei die Handlung des Nutzers eine Eingabe des Nutzers in eine Nutzerschnittstelle, ein Verlassen des Fortbewegungsmittels oder das Öffnen einer Tür des Fortbewegungsmittels umfasst;
- Auswerten zumindest der erfassten Handlung; und
- selektives Steuern der Türöffnungsfunktionalitäten der Türen in Abhängigkeit von einem Ergebnis des Auswertens, wobei zumindest eine Tür des Fortbewegungsmittels deaktiviert wird.

Der Begriff Computer ist dabei breit zu verstehen. Insbesondere umfasst er auch Steuergeräte, eingebettete Systeme und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung zum Steuern von Türöffnungsfunktionalitäten von Türen eines Fortbewegungsmittels auf:
- einem Erfassungsmodul zum Erfassen einer Handlung eines Nutzers des Fortbewegungsmittels, wobei die Handlung des Nutzers eine Eingabe des Nutzers in eine Nutzerschnittstelle, ein Verlassen des Fortbewegungsmittels oder das Öffnen einer Tür des Fortbewegungsmittels umfasst;
- einem Auswertemodul zum Auswerten zumindest der erfassten Handlung; und
- einem Steuermodul zum selektiven Steuern der Türöffnungsfunktionalitäten der Türen in Abhängigkeit von einem Ergebnis des Auswertens, wobei zumindest eine Tür des Fortbewegungsmittels deaktiviert wird.

Anders als bei der Verwendung eines Funkschlüssels oder eines Zentralverriegelungsschalters, bei der alle Türen verriegelt oder entriegelt werden, werden bei der erfindungsgemäßen Lösung Handlungen des Nutzers erfasst und ausgewertet, um im Ansprechen darauf selektiv die Türöffnungsfunktionalitäten zu steuern. Dieses Steuern der Türöffnungsfunktionalitäten ist in Ergänzung zu dem normalen Verschließen oder Öffnen des Fortbewegungsmittels zu sehen. Da die erfindungsgemäße Lösung im Wesentlichen softwarebasiert umgesetzt werden kann und bestehende Komponenten des Fortbewegungsmittels nutzt, kann sie kostengünstig implementiert werden. Zudem ist eine nutzungsbasierte Inrechnungstellung möglich. Die beschriebene Lösung kann vorzugsweise auch genutzt werden, während der Motor des Fortbewegungsmittels läuft, solange der Nutzer den Schlüssel des Fortbewegungsmittels bei sich trägt.

Gemäß einer ersten Ausführungsform der Erfindung umfasst die Handlung des Nutzers eine Eingabe des Nutzers in eine Nutzerschnittstelle. Mittels einer Nutzerschnittstelle wird einem Insassen des Fortbewegungsmittels, insbesondere dem Fahrer, die Möglichkeit gegeben, auf einfache Weise über eine individuelle Auswahl die Zugangsberechtigung jeder einzelnen Tür zu konfigurieren. Beispielsweise kann es für einen Taxifahrer sehr unangenehm oder sogar gefährlich sein, wenn bei Dunkelheit oder Dämmerung mehrere stark betrunkene Personen in ein Taxi einsteigen wollen. Derartige Situationen können durch eine individuelle Steuerung der Zugangsberechtigung entschärft werden, indem z.B. nur denjenigen Personen, die dem Taxifahrer unbedenklich erscheinen, Zutritt gewährt wird, oder indem von vornherein nur eine Tür aktiv ist.

Erfindungsgemäß wird durch die Eingabe des Nutzers zumindest eine Tür für ein Öffnen von außen gesperrt oder freigegeben. Vorzugsweise weist eine Nutzerschnittstelle für einen Nutzer des Fortbewegungsmittels dazu Schaltflächen zum selektiven Sperren oder Freigeben von Türen des Fortbewegungsmittels für ein Öffnen von außen auf. Über die entsprechenden Schaltflächen kann der Nutzer die Türöffnungsfunktionalität jeder einzelnen Tür selektiv aktivieren oder deaktivieren. Der Nutzer kann insbesondere eine, mehrere oder alle Türen deaktivieren, sodass diese von außen nicht mehr zu öffnen sind. Für diesen Zweck wird eine individuelle Ansteuerung der Türsteuergeräte oder Türschlösser ausgenutzt. Diese werden entsprechend der Nutzereingabe in einen inaktiven Zustand versetzt, sodass eine einzelne Tür von außen wie verschlossen wirkt. Von innen können hingegen jederzeit alle Türen, auch die deaktivierten, geöffnet werden. Vorzugsweise weist die Nutzerschnittstelle zusätzlich eine Schaltfläche zum Auslösen einer Alarmfunktion auf.

Gemäß einer zweiten Ausführungsform der Erfindung umfasst die Handlung des Nutzers ein Verlassen des Fortbewegungsmittels oder ein Öffnen einer Tür des Fortbewegungsmittels. Um einem Diebstahl des Fortbewegungsmittels oder einem Diebstahl von Gegenständen aus dem Fortbewegungsmittel vorzubeugen, können die Türöffnungsfunktionalitäten selektiv gesteuert werden, wenn der Nutzer das Fortbewegungsmittel verlässt. Dies kann unmittelbar nach dem Verlassen erfolgen, was z.B. anhand der Daten von Belegungssensoren für die Sitze und der Türsignale erkannt werden kann. Alternativ erfolgt das selektive Steuern erst dann, wenn zusätzlich zum Verlassen des Fortbewegungsmittels eine vorgegebene Situation erkannt wird, z.B. ein Tankstopp. Ein Tankstopp kann z.B. anhand von Navigationsdaten oder des Öffnens des Tankdeckels erkannt werden. In dieser Situation können beispielsweise alle vom Tankdeckel abgewandten Türen deaktiviert werden.

Gemäß einem Aspekt der Erfindung ist die Nutzerschnittstelle in das Fortbewegungsmittel integriert. Alternativ oder zusätzlich kann die Nutzerschnittstelle durch ein Nutzergerät bereitgestellt werden, das mit dem Fortbewegungsmittel gekoppelt ist. Die Nutzerschnittstelle kann z.B. durch ein Infotainmentdisplay eines Fortbewegungsmittels bereitgestellt werden. Ein solches ist in Fortbewegungsmitteln oftmals ohnehin vorhanden. Alternativ oder zusätzlich kann die Nutzerschnittstelle auch durch ein gekoppeltes Nutzergerät bereitgestellt werden, z.B. ein Tablett oder Smartphone. Derartige Nutzergeräte werden von einer Vielzahl von Nutzern mitgeführt, sodass eine breite Anwendbarkeit gegeben ist. Auch eine selektive Nutzung einer Funkfernbedienung zur Aktivierung oder Deaktivierung von Türen ist möglich. Zu diesem Zweck können separate Tasten oder die Verwendung einer Tastenfolge vorgesehen sein.

Gemäß einem Aspekt der Erfindung werden Informationen zumindest eines externen Sensors, die Uhrzeit oder ein Nutzerprofil beim Steuern der Türöffnungsfunktionalitäten berücksichtigt werden. Beispielsweise können Informationen eines Regen-Licht-Sensors, die aktuelle Tageszeit oder die mittels Sitzbelegungssensoren erfasste Anzahl der Nutzer berücksichtigt werden, um die einzelnen Türen zu konfigurieren. Vorzugsweise können dazu individuelle Nutzerprofile angelegt werden.

Gemäß einem Aspekt der Erfindung werden Zustände der Türöffnungsfunktionalitäten der Türen nach außen signalisiert. Beispielsweise kann eine Türgriffbeleuchtung entsprechend dem Zustand der Tür beleuchtet werden, wenn ein Öffnungswunsch erkannt wird. Die Beleuchtung kann dabei z.B. blinkend, pulsierend oder dauerhaft erfolgen. Bei einer deaktivierten Tür kann die Türgriffbeleuchtung beispielsweise rot und bei einer aktiven Tür grün sein. Die für die Beleuchtung verwendeten Farben sind vorzugsweise durch den Nutzer konfigurierbar. Solche Signalisierungen haben den Vorteil, dass sie intuitiv verstanden werden. Die Türgriffbeleuchtung kann zusätzlich den Nutzer beim Verlassen des Fortbewegungsmittels darauf hinweisen, dass das Fortbewegungsmittel noch nicht verschlossen ist. Ebenso kann der Nutzer im Falle eines erkannten Zutrittswunsches in einer gewünschten, vorzugsweise konfigurierbaren Farbe willkommen geheißen werden. In diesem Zusammenhang kann der Status einzelner verschlossener Türen auch durch eine Anwendung dargestellt werden, die auf einem Nutzergerät läuft.

Eine weitere Möglichkeit, Zustände der Türöffnungsfunktionalitäten nach außen zu signalisieren, besteht in der Verwendung von Projektionen. Zu diesem Zweck können geeignete Schriftzüge, Symbole oder Piktogramme auf den Boden oder die Fenster projiziert werden. Beispielsweise kann bei einer verschlossenen Beifahrertür ein Pfeil zur hinteren Tür auf dem Boden erscheinen und der Türgriff der Beifahrertür rot blinken oder pulsieren sowie vibrieren. An der hintern Beifahrertür kann hingegen der Schriftzug "Willkommen", vorzugsweise in der jeweiligen Landessprache, auf den Boden oder die Seitenscheibe projiziert werden.

Gemäß einem Aspekt der Erfindung wird dem Nutzer ein Öffnungswunsch einer außerhalb des Fortbewegungsmittels befindlichen Person signalisiert. Ein solcher Öffnungswunsch kann beispielsweise angenommen werden, wenn ein Ziehen oder Drücken eines Türgriffs erkannt wird. Um den Nutzer insbesondere bei komplett deaktivierten Türen auf einen Öffnungswunsch aufmerksam zu machen, kann der Nutzer z.B. optisch über ein Infotainmentdisplay oder akustisch über einen Signalton über einen Öffnungswunsch informiert werden.

Gemäß einem Aspekt der Erfindung werden im Ansprechen auf eine detektierte Beschleunigung eines Schlüssels des Fortbewegungsmittels oder im Ansprechen auf einen erkannten unberechtigten Zutritt zum Fortbewegungsmittel die Türen des Fortbewegungsmittels verriegelt oder das Fortbewegungsmittel wird deaktiviert. Eventuelle Diebstahlversuche, während sich der Nutzer außerhalb des Fortbewegungsmittels befindet, können zusätzlich durch die Nutzung von Beschleunigungssensoren im Schlüssel des Fortbewegungsmittels erschwert werden. Bemerkt der Nutzer einen drohenden Diebstahlversuch, kann er den Schlüssel auf den Boden oder, im Falle einer Bedrohung durch den Täter, in Richtung des Diebes werfen. Die dabei auftretenden Beschleunigungen unterscheiden sich deutlich von denen, die bei einem normalen Fallenlassen des Schlüssels auftreten. Im Ansprechen auf entsprechende charakteristische Beschleunigungen, gegebenenfalls in Kombination mit hektischen Versuchen, eine Tür zu öffnen, können die Türen oder das gesamte Fortbewegungsmittel für eine gewisse Zeit deaktiviert werden. Dadurch hat der Nutzer Zeit, sich in Sicherheit zu bringen. Zugleich kann das Fortbewegungsmittel für eine definierte Zeit nicht mit dem Schlüssel geöffnet und somit nicht gestohlen werden. Sollte es dem Täter dennoch gelingen, Zutritt zum Fortbewegungsmittel zu erlangen, kann der Nutzer vorzugsweise das Fortbewegungsmittel mit einer Anwendung auf seinem Nutzergerät deaktivieren und verriegeln, sodass der Täter festgesetzt wird und auf das Eintreffen der Polizei warten muss.

Gemäß einem Aspekt der Erfindung wird eine Position des Nutzers relativ zum Fortbewegungsmittel erfasst und in Abhängigkeit von der erfassten Position wird zumindest eine Tür für ein Öffnen von außen gesperrt. Die Erkennung der Nutzerposition außerhalb des Fortbewegungsmittels in Relation zum Fortbewegungsmittel kann beispielsweise unter Verwendung von Tür- oder Klappensignalen erfolgen, z.B. Signalen der Heckklappe, des Tankdeckels oder der Motorhaube. Ebenso ist es möglich, die Position eines Funkschlüssels oder eines gekoppelten Nutzergerätes zur Positionserkennung zu verwenden. Die nutzerabgewandten Türen können dann jeweils deaktiviert werden. Deaktivierte Türen können von außen geöffnet werden, wenn der Nutzer den Funkschlüssel bei sich trägt. Sollte der Schlüssel im Fortbewegungsmittel verblieben sein, kann eine Öffnung der Türen unter Verwendung einer Applikation auf dem Nutzergerät oder durch eine Positionserkennung des Nutzergerätes erfolgen.

Verlässt der Funkschlüssel die Empfangsreichweite des Fortbewegungsmittels, kann der Nutzer akustisch und optisch informiert werden, z.B. über sein Nutzergerät, dass das Fortbewegungsmittel unverschlossen ist. Alternativ oder zusätzlich kann das Fortbewegungsmittel daraufhin automatisch verschlossen werden. Nähert sich der Nutzer wieder, kann der Türstatus beispielsweise durch die beleuchteten Türgriffe angezeigt werden. Eventuelle Versuche, sich bei verschlossenem Fortbewegungsmittel unberechtigt Zutritt zu verschaffen, können dem Nutzer über eine Anwendung auf seinem Nutzergerät mitgeteilt oder gespeichert werden.

Besonders vorteilhaft wird ein erfindungsgemäßes Verfahren oder eine erfindungsgemäße Vorrichtung in einem manuell gesteuerten oder (teil-)autonomen Fortbewegungsmittel eingesetzt. Bei dem Fortbewegungsmittel kann es sich insbesondere um ein Kraftfahrzeug handeln, z.B. einen Personenkraftwagen oder ein Nutzfahrzeug. Die Verwendung ist dabei besonders vorteilhaft für Fortbewegungsmittel, die für Personenbeförderungsdienste genutzt werden. Neben Fahrdiensten mit Fahrer können auch autonome Sammeltaxis von der beschriebenen Lösung profitieren. In diesem Fall wird eine erfindungsgemäße Lösung für den Fahrgastschutz eingesetzt. Wenn sich der Fahrgast unsicher fühlt, kann dieser eine Deaktivierung der Türen vornehmen. Der Operator des Taxiunternehmens schaltet sich auf das Fahrzeug und überprüft die Situation oder die potenziellen Fahrgäste, die auf Zugang warten, z.B. durch eine Videoüberwachung oder eine Gesprächsaufnahme. Der Operator kann im Anschluss die Deaktivierung zurücksetzen und die Situation im Sammeltaxi weiterhin überwachen. In Verbindung mit einer Gesichtserkennung kann zudem eine Überprüfung eines potenziellen Fahrgastes durch Abgleich mit einer Fahndungsdatei erfolgen. Liefert der Abgleich ein positives Ergebnis, so kann direkt mit der Polizei Kontakt aufgenommen werden.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zum Steuern von Türöffnungsfunktionalitäten von Türen eines Fortbewegungsmittels;
- Fig. 2: zeigt eine erste Ausführungsform einer Vorrichtung zum Steuern von Türöffnungsfunktionalitäten von Türen eines Fortbewegungsmittels;
- Fig. 3: zeigt eine zweite Ausführungsform einer Vorrichtung zum Steuern von Türöffnungsfunktionalitäten von Türen eines Fortbewegungsmittels;
- Fig. 4: stellt schematisch ein Fortbewegungsmittel dar, in dem eine erfindungsgemäße Lösung realisiert ist;
- Fig. 5: zeigte schematisch eine Nutzerschnittstelle zum Steuern von Türöffnungsfunktionalitäten von Türen eines Fortbewegungsmittels; und
- Fig. 6: zeigt schematisch die Nutzerschnittstelle aus Fig. 5 nach dem Auslösen einer Alarmfunktion.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

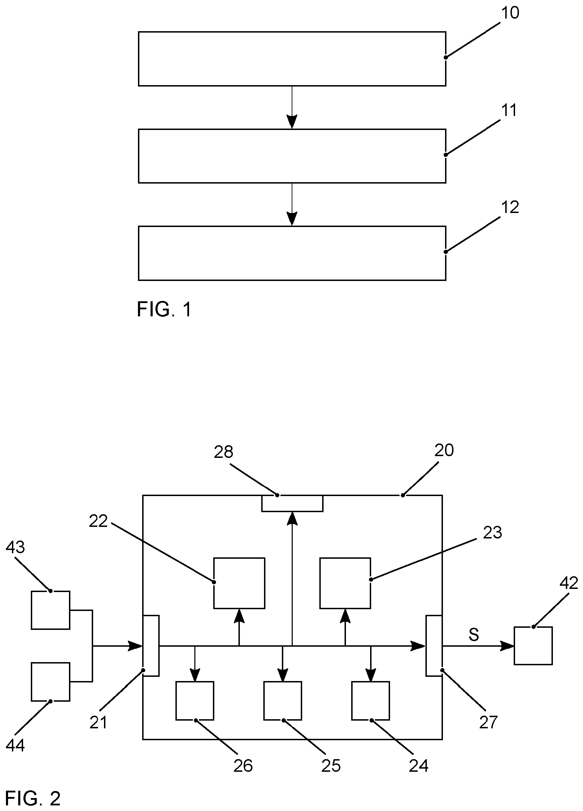

Fig. 1 zeigt schematisch ein Verfahren zum Steuern von Türöffnungsfunktionalitäten von Türen eines Fortbewegungsmittels. In einem ersten Schritt wird eine Handlung eines Nutzers des Fortbewegungsmittels erfasst 10. Zumindest diese erfasste Handlung wird ausgewertet 11. In Abhängigkeit von einem Ergebnis des Auswertens 11 werden dann die Türöffnungsfunktionalitäten der Türen selektiv gesteuert 12. Die Zustände der Türöffnungsfunktionalitäten der Türen können bei Bedarf nach außen signalisiert werden.

Die Handlung des Nutzers kann einerseits eine Eingabe in eine Nutzerschnittstelle sein. Die dazu erforderliche Nutzerschnittstelle kann in das Fortbewegungsmittel integriert sein oder durch ein Nutzergerät bereitgestellt werden, das mit dem Fortbewegungsmittel gekoppelt ist. Vorzugsweise weist die Nutzerschnittstelle Schaltflächen zum selektiven Sperren oder Freigeben von Türen des Fortbewegungsmittels für ein Öffnen von außen auf. Durch die Eingabe des Nutzers wird dementsprechend zumindest eine Tür für ein Öffnen von außen gesperrt oder freigegeben. Im Falle einer gesperrten Tür wird dem Nutzer vorzugsweise ein Öffnungswunsch einer außerhalb des Fortbewegungsmittels befindlichen Person signalisiert.

Die Handlung des Nutzers kann andererseits auch ein Verlassen des Fortbewegungsmittels sein. In diesem Fall wird vorzugsweise zusätzlich eine Position des Nutzers relativ zum Fortbewegungsmittel erfasst und ausgewertet. In Abhängigkeit von der erfassten Position wird dann zumindest eine Tür für ein Öffnen von außen gesperrt.

Fig. 2 zeigt eine vereinfachte schematische Darstellung einer ersten Ausführungsform einer Vorrichtung 20 zum Steuern von Türöffnungsfunktionalitäten von Türen eines Fortbewegungsmittels. Die Vorrichtung 20 hat einen Eingang 21, über den ein Erfassungsmodul 22 Informationen empfängt, anhand derer es eine Handlung eines Nutzers des Fortbewegungsmittels erfassen kann. Ein Auswertemodul 23 ist dazu eingerichtet, zumindest die erfasste Handlung auszuwerten. Ein Steuermodul 24 ist dazu eingerichtet, in Abhängigkeit von einem Ergebnis des Auswertens die Türöffnungsfunktionalitäten der Türen selektiv zu steuern. Zu diesem Zweck kann das Steuermodul 24 entsprechende Steuerbefehle S über einen Ausgang 27 der Vorrichtung 20 an die Türen bzw. ein Türsteuergerät 42 ausgeben. Die Vorrichtung 20 kann zudem eingerichtet sein, Zustände der Türöffnungsfunktionalitäten der Türen nach außen zu signalisieren.

Die Handlung des Nutzers kann einerseits eine Eingabe in eine Nutzerschnittstelle 43 sein. Die dazu erforderliche Nutzerschnittstelle 43 kann in das Fortbewegungsmittel integriert sein oder durch ein Nutzergerät bereitgestellt werden, das mit dem Fortbewegungsmittel gekoppelt ist. Vorzugsweise weist die Nutzerschnittstelle 43 Schaltflächen zum selektiven Sperren oder Freigeben von Türen des Fortbewegungsmittels für ein Öffnen von außen auf. Durch die Eingabe des Nutzers wird dementsprechend zumindest eine Tür für ein Öffnen von außen gesperrt oder freigegeben. Im Falle einer gesperrten Tür wird dem Nutzer vorzugsweise ein Öffnungswunsch einer außerhalb des Fortbewegungsmittels befindlichen Person signalisiert.

Die Handlung des Nutzers kann andererseits auch ein Verlassen des Fortbewegungsmittels sein. In diesem Fall wird vorzugsweise zusätzlich mittels einer Sensorik 44 eine Position des Nutzers relativ zum Fortbewegungsmittel erfasst und ausgewertet. In Abhängigkeit von der erfassten Position wird dann zumindest eine Tür für ein Öffnen von außen gesperrt.

Das Erfassungsmodul 22, das Auswertemodul 23 und das Steuermodul 24 können von einem Kontrollmodul 25 gesteuert werden. Über eine Benutzerschnittstelle 28 können gegebenenfalls Einstellungen des Erfassungsmoduls 22, des Auswertemoduls 23, des Steuermoduls 24 oder des Kontrollmoduls 25 geändert werden. Die in der Vorrichtung 20 anfallenden Daten können bei Bedarf in einem Speicher 26 abgelegt werden, beispielsweise für eine spätere Auswertung oder für eine Nutzung durch die Komponenten der Vorrichtung 20. Das Erfassungsmodul 22, das Auswertemodul 23, die Entscheidungslogik 24, das Steuermodul 24 sowie das Kontrollmodul 25 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 27 können als getrennte Schnittstellen oder als eine kombinierte bidirektionale Schnittstelle implementiert sein.

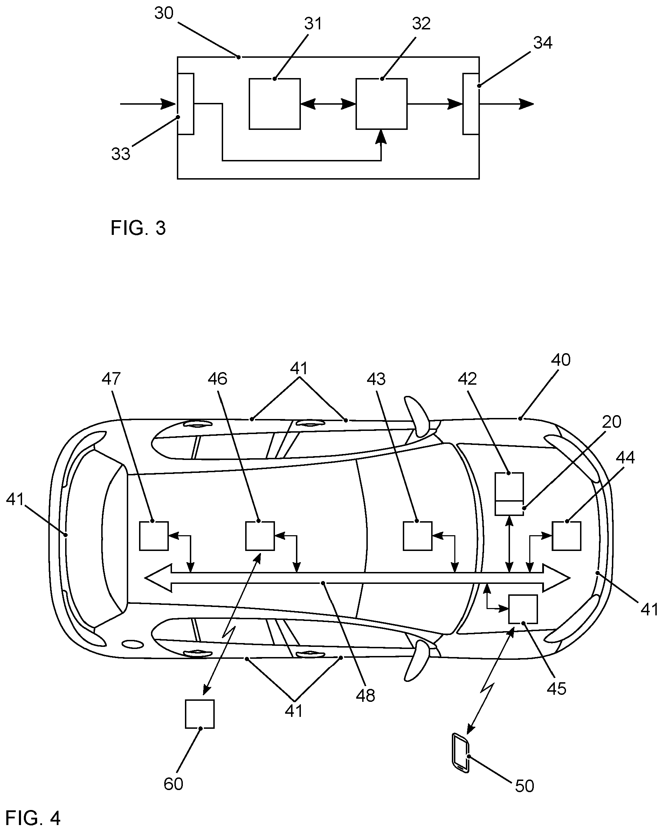

Fig. 3 zeigt eine vereinfachte schematische Darstellung einer zweiten Ausführungsform einer Vorrichtung zum Steuern von Türöffnungsfunktionalitäten von Türen eines Fortbewegungsmittels. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, beispielsweise von Informationen zu einer erfassten Handlung eines Nutzers des Fortbewegungsmittels. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 stellt schematisch ein Fortbewegungsmittel 40 dar, in dem eine erfindungsgemäße Lösung realisiert ist. Bei dem Fortbewegungsmittel 40 handelt es sich in diesem Beispiel um ein Kraftfahrzeug. Das Kraftfahrzeug weist eine Mehrzahl von Türen 41 auf, die durch ein Türsteuergerät 42 gesteuert werden. Der Begriff Tür 41 ist breit zu verstehen und kann neben den Türen 41 für den Zustieg von Personen auch die Motorhaube, die Heckklappe, die Tankklappe oder andere verschließbare Elemente umfassen. Ein Vorrichtung 20 zum Steuern von Türöffnungsfunktionalitäten der Türen 41 ist dazu eingerichtet, Handlungen eines Nutzers des Fortbewegungsmittels 40 zu erfassen und auszuwerten und Steuerbefehle S an das Türsteuergerät 42 auszugeben. Die Vorrichtung 20 ist in Fig. 4 als eigenständige Komponente dargestellt, sie kann aber auch in das Türsteuergerät 42 oder in ein anderes Steuergerät integriert sein. Handlungen des Nutzers können beispielsweise Eingaben in eine Nutzerschnittstelle 43 oder ein Verlassen des Fortbewegungsmittels 40 sein. Das Verlassen des Fortbewegungsmittels 40 kann beispielsweise mittels einer Sensorik 44 erfasst werden. Die Sensorik 44 kann insbesondere Sensoren zum Erfassen der Sitzbelegung, Sensoren zum Erfassen von Umgebungsinformationen, wie Kameras, Radarsensoren, Lidarsensoren oder Ultraschallsensoren, aber auch Sensoren zum Erfassen einer Signalstärke oder Position eines Funkschlüssels umfassen. Eine Schnittstelle 45 ermöglicht es, ein Nutzerendgerät 50 mit dem Fortbewegungsmittel 40 zu koppeln. Das Nutzerendgerät 50 kann seinerseits ebenfalls eine Nutzerschnittstelle 43 bereitstellen. Mittels einer Datenübertragungseinheit 46 kann eine Verbindung zu einem Backend 60 aufgebaut werden, z.B. zum Übermitteln eines Alarmsignals oder zur Abfrage von Daten. Zur Speicherung von Daten ist ein Speicher 47 vorhanden. Der Datenaustausch zwischen den verschiedenen Komponenten des Kraftfahrzeugs erfolgt über ein Netzwerk 48.

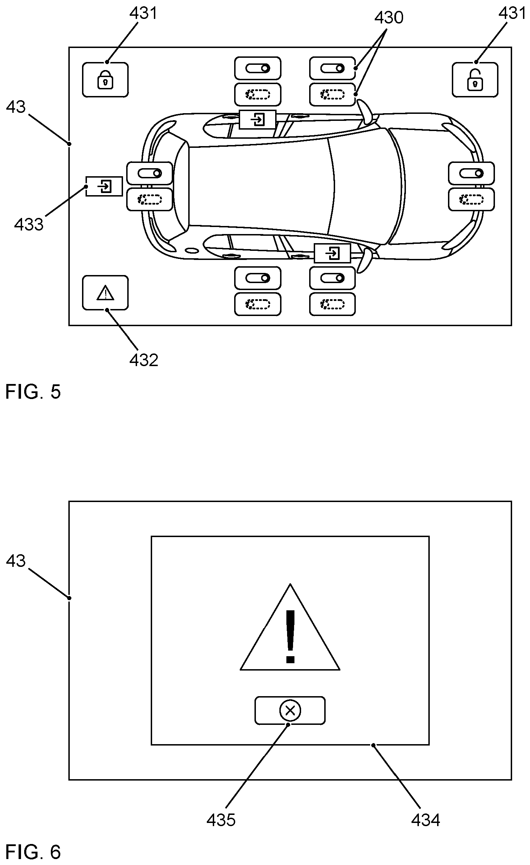

Fig. 5 zeigte schematisch eine Nutzerschnittstelle 43 zum Steuern von Türöffnungsfunktionalitäten von Türen eines Fortbewegungsmittels. Die Darstellung der Nutzerschnittstelle 43 kann beispielsweise auf einem Infotainmentdisplay angezeigt und individuell erweitert oder reduziert werden. Den einzelnen Türen des Fortbewegungsmittels, hier inklusive der Motorhaube und der Heckklappe, sind jeweils zwei Schaltflächen 430 zugeordnet, mit den die jeweiligen Schließmechanismen für ein Öffnen von außen aktiviert und deaktiviert werden können. Dabei können zusätzliche Informationen berücksichtigt werden, um z.B. Grundeinstellungen für die einzelnen Türen festzulegen. Beispielsweise können Informationen eines Regen-Licht-Sensors, die Uhrzeit oder die Anzahl der Nutzer berücksichtigt werden, um die einzelnen Türen zu konfigurieren. Vorzugsweise können dazu individuelle Nutzerprofile angelegt werden. Mit Hilfe zweier Schaltflächen 431 für eine Zentralverriegelung können alle Türen verschlossen oder geöffnet werden. Zusätzlich kann eine Schaltfläche 432 für eine Alarmfunktion vorgesehen sein, mittels derer der Nutzer einen Notruf auslösen kann. Mit Hilfe von Informationsfeldern 433 an den einzelnen Türen kann dem Nutzer ein Öffnungswunsch optisch signalisiert werden.

Fig. 6 zeigt schematisch die Nutzerschnittstelle aus Fig. 5 nach dem Auslösen einer Alarmfunktion. Nach der Aktivierung der Alarmfunktion wird der ausgelöste Alarm durch eine Alarmanzeige 434 visualisiert. Dabei ist eine Schaltfläche 435 für einen Abbruch des Alarms vorgesehen, um ein versehentliches Auslösen der Alarmfunktion zu vermeiden bzw. zu korrigieren.

### Bezugszeichenliste

- 10: Erfassen einer Handlung eines Nutzers
- 11: Auswerten zumindest der erfassten Handlung
- 12: Selektives Steuern der Türöffnungsfunktionalitäten
- 20: Vorrichtung
- 21: Eingang
- 22: Erfassungsmodul
- 23: Auswertemodul
- 24: Steuermodul
- 25: Kontrollmodul
- 26: Speicher
- 27: Ausgang
- 28: Benutzerschnittstelle
- 30: Vorrichtung
- 31: Speicher
- 32: Prozessor
- 33: Eingang
- 34: Ausgang
- 40: Fortbewegungsmittel
- 41: Tür
- 42: Türsteuergerät
- 43: Nutzerschnittstelle
- 44: Sensorik
- 45: Schnittstelle
- 46: Datenübertragungseinheit
- 47: Speicher
- 48: Netzwerk
- 50: Nutzerendgerät
- 60: Backend
- 430: Schaltfläche für Türaktivierung/Deaktivierung
- 431: Schaltfläche für Zentralverriegelung
- 432: Schaltfläche für Alarmfunktion
- 433: Informationsfeld
- 434: Alarmanzeige
- 435: Schaltfläche für Abbruch
- S: Steuersignal

## Patentansprüche

1. Verfahren zum Steuern von Türöffnungsfunktionalitäten von Türen (41) eines Fortbewegungsmittels (40), mit den Schritten:
- Erfassen (10) einer Handlung eines Nutzers des Fortbewegungsmittels (40), wobei die Handlung des Nutzers eine Eingabe des Nutzers in eine Nutzerschnittstelle (43), ein Verlassen des Fortbewegungsmittels (40) oder das Öffnen einer Tür (41) des Fortbewegungsmittels (40) umfasst;
- Auswerten (11) zumindest der erfassten Handlung; und
- selektives Steuern (12) der Türöffnungsfunktionalitäten der Türen (41) in Abhängigkeit von einem Ergebnis des Auswertens (11), wobei zumindest eine Tür (41) des Fortbewegungsmittels (40) deaktiviert wird.

2. Verfahren gemäß Anspruch 1, wobei die Nutzerschnittstelle (43) in das Fortbewegungsmittel (40) integriert ist oder durch ein Nutzergerät (50) bereitgestellt wird, das mit dem Fortbewegungsmittel (40) gekoppelt ist.

3. Verfahren gemäß Anspruch 1 oder 2, wobei Informationen zumindest eines externen Sensors (44), die Uhrzeit oder ein Nutzerprofil beim Steuern der Türöffnungsfunktionalitäten berücksichtigt werden.

4. Verfahren gemäß einem der vorherigen Ansprüche, wobei Zustände der Türöffnungsfunktionalitäten der Türen (41) nach außen signalisiert werden.

5. Verfahren gemäß Anspruch 4, wobei die Zustände der Türöffnungsfunktionalitäten der Türen (41) mittels einer Beleuchtung der Türgriffe nach außen signalisiert werden.

6. Verfahren gemäß einem der vorherigen Ansprüche, wobei dem Nutzer ein Öffnungswunsch einer außerhalb des Fortbewegungsmittels (40) befindlichen Person signalisiert wird.

7. Verfahren gemäß Anspruch 1, wobei eine Position des Nutzers relativ zum Fortbewegungsmittel (40) erfasst wird und in Abhängigkeit von der erfassten Position zumindest eine Tür für ein Öffnen von außen gesperrt wird.

8. Verfahren gemäß Anspruch 1 oder 7, wobei im Ansprechen auf eine detektierte Beschleunigung eines Schlüssels des Fortbewegungsmittels (40) oder im Ansprechen auf einen erkannten unberechtigten Zutritt zum Fortbewegungsmittel (40) die Türen (41) des Fortbewegungsmittels (40) verriegelt werden oder das Fortbewegungsmittel (40) deaktiviert wird.

9. Computerprogramm mit Instruktionen, die bei Ausführung durch eine Vorrichtung eines Fortbewegungsmittels die Vorrichtung zur Ausführung der Schritte eines Verfahrens gemäß einem der Ansprüche 1 bis 8 zum Steuern von Türöffnungsfunktionalitäten von Türen (41) des Fortbewegungsmittels (40) veranlassen.

10. Vorrichtung zum Steuern von Türöffnungsfunktionalitäten von Türen (41) eines Fortbewegungsmittels (40), mit:
- einem Erfassungsmodul (22) zum Erfassen (10) einer Handlung eines Nutzers des Fortbewegungsmittels (40), wobei die Handlung des Nutzers eine Eingabe des Nutzers in eine Nutzerschnittstelle (43), ein Verlassen des Fortbewegungsmittels (40) oder das Öffnen einer Tür (41) des Fortbewegungsmittels (40) umfasst;
- einem Auswertemodul (23) zum Auswerten (11) zumindest der erfassten Handlung; und
- einem Steuermodul (24) zum selektiven Steuern (12) der Türöffnungsfunktionalitäten der Türen (41) in Abhängigkeit von einem Ergebnis des Auswertens (11), wobei zumindest eine Tür (41) des Fortbewegungsmittels (40) deaktiviert wird.

11. Fortbewegungsmittel (40), **dadurch gekennzeichnet, dass** das Fortbewegungsmittel (40) eine Vorrichtung (20) gemäß Anspruch 10 aufweist oder eingerichtet ist, ein Verfahren gemäß einem der Ansprüche 1 bis 8 zum Steuern von Türöffnungsfunktionalitäten von Türen (41) des Fortbewegungsmittels (40) auszuführen.

## Claims

1. Method for controlling door-opening functionalities of doors (41) of a means of transport (40), comprising the steps of:
- detecting (10) an action of a user of the means of transport (40), wherein the action of the user comprises an input by the user into a user interface (43), exiting the means of transport (40), or opening a door (41) of the means of transport (40);
- evaluating (11) at least the detected action; and
- selectively controlling (12) the door-opening functionalities of the doors (41) depending on a result of the evaluation (11), wherein at least one door (41) of the means of transport (40) is deactivated.

2. Method according to claim 1, wherein the user interface (43) is integrated into the means of transport (40) or is provided by a user device (50) that is coupled to the means of transport (40).

3. Method according to claim 1 or 2, wherein information from at least one external sensor (44), the time or a user profile is taken into account when controlling the door-opening functionalities.

4. Method according to any of the preceding claims, wherein states of the door-opening functionalities of the doors (41) are signaled to the outside.

5. Method according to claim 4, wherein the states of the door-opening functionalities of the doors (41) are signaled to the outside by means of illumination of the door handles.

6. Method according to any of the preceding claims, wherein a request to open, from a person located outside of the means of transport (40), is signaled to the user.

7. Method according to claim 1, wherein a position of the user relative to the means of transport (40) is detected and, depending on the detected position, at least one door is locked to prevent opening from the outside.

8. Method according to claim 1 or 7, wherein, in response to a detected acceleration of a key of the means of transport (40) or in response to a recognized unauthorized access to the means of transport (40), the doors (41) of the means of transport (40) are locked or the means of transport (40) is deactivated.

9. Computer program comprising instructions that, when carried out by means of an apparatus of a means of transport, trigger the apparatus to carry out the steps of a method according to any of claims 1 to 8 in order to control door-opening functionalities of doors (41) of the means of transport (40).

10. Apparatus for controlling door-opening functionalities of doors (41) of a means of transport (40), comprising:
- a detection module (22) for detecting (10) an action of a user of the means of transport (40), wherein the action of the user comprises an input by the user into a user interface (43), exiting the means of transport (40), or opening a door (41) of the means of transport (40);
- an evaluation module (23) for evaluating (11) at least the detected action; and
- a control module (24) for selectively controlling (12) the door-opening functionalities of the doors (41) depending on a result of the evaluation (11), wherein at least one door (41) of the means of transport (40) is deactivated.

11. Means of transport (40), **characterized in that** the means of transport (40) has an apparatus (20) according to claim 10 or is configured to carry out a method according to any of claims 1 to 8 in order to control door-opening functionalities of doors (41) of the means of transport (40).

## Revendications

1. Procédé pour la commande de fonctionnalités d'ouverture des portières (41) d'un moyen de locomotion (40), comportant les étapes consistant à :
- déterminer (10) une action d'un utilisateur du moyen de locomotion (40), dans lequel l'action de l'utilisateur comprend une saisie de l'utilisateur dans une interface utilisateur (43), une sortie du moyen de locomotion (40) ou l'ouverture d'une portière (41) du moyen de locomotion (40) ;
- évaluer (11) au moins l'action déterminée ; et
- commander (12) de manière sélective les fonctionnalités d'ouverture des portières (41) en fonction d'un résultat de l'évaluation (11), dans lequel au moins une portière (41) du moyen de locomotion (40) est désactivée.

2. Procédé selon la revendication 1, dans lequel l'interface utilisateur (43) est intégrée dans le moyen de locomotion (40) ou est fournie par un appareil utilisateur (50) couplé au moyen de locomotion (40).

3. Procédé selon la revendication 1 ou 2, dans lequel des informations d'au moins un capteur (44) externe, l'heure ou un profil utilisateur sont pris en compte lors de la commande des fonctionnalités d'ouverture de portières.

4. Procédé selon l'une des revendications précédentes, dans lequel des états des fonctionnalités d'ouverture des portières (41) sont signalés à l'extérieur.

5. Procédé selon la revendication 4, dans lequel les états des fonctionnalités d'ouverture des portières (41) sont signalés à l'extérieur au moyen d'un éclairage des poignées de portière.

6. Procédé selon l'une des revendications précédentes, dans lequel une demande d'ouverture d'une personne se trouvant à l'extérieur du moyen de locomotion (40) est signalée à l'utilisateur.

7. Procédé selon la revendication 1, dans lequel une position de l'utilisateur par rapport au moyen de locomotion (40) est déterminée et, en fonction de la position déterminée, au moins une portière est bloquée pour une ouverture depuis l'extérieur.

8. Procédé selon la revendication 1 ou 7, dans lequel, en réponse à une accélération détectée d'une clé du moyen de locomotion (40) ou en réponse à un accès non autorisé reconnu au moyen de locomotion (40), les portières (41) du moyen de locomotion (40) sont verrouillées ou le moyen de locomotion (40) est désactivé.

9. Programme informatique comportant des instructions, lesquelles, lors de leur exécution par un dispositif d'un moyen de locomotion, amènent le dispositif à exécuter les étapes d'un procédé selon l'une des revendications 1 à 8 pour la commande des fonctionnalités d'ouverture des portières (41) du moyen de locomotion (40).

10. Dispositif pour la commande de fonctionnalités d'ouverture des portières (41) d'un moyen de locomotion (40), comportant :
- un module de détermination (22) permettant de déterminer (10) une action d'un utilisateur du moyen de locomotion (40), dans lequel l'action de l'utilisateur comprend une saisie de l'utilisateur dans une interface utilisateur (43), une sortie du moyen de locomotion (40) ou l'ouverture d'une portière (41) du moyen de locomotion (40) ;
- un module d'évaluation (23) permettant d'évaluer (11) au moins l'action déterminée ; et
- un module de commande (24) permettant de commander (12) de manière sélective les fonctionnalités d'ouverture des portières (41) en fonction d'un résultat de l'évaluation (11), dans lequel au moins une portière (41) du moyen de locomotion (40) est désactivée.

11. Moyen de locomotion (40), **caractérisé en ce que** le moyen de locomotion (40) présente un dispositif (20) selon la revendication 10 ou est configuré pour exécuter un procédé selon l'une des revendications 1 à 8 pour la commande des fonctionnalités d'ouverture des portières (41) du moyen de locomotion (40).
